# EUROPÄISCHE PATENTSCHRIFT

(11) **EP 1 577 578 B1**
(45) Veröffentlichungstag und Bekanntmachung des Hinweises auf die Patenterteilung: **30.05.2007**
(21) Anmeldenummer: 05004638.2
(22) Anmeldetag: 03.03.2005
(51) Int. Cl.: F16D 55/00, F16D 65/097

(54) **Schutzabdeckung für eine Scheibenbremse und Scheibenbremse mit einer solchen Schutzabdeckung.**
Protective cover for a disc brake and a disc brake including such a protective cover.
Revêtement de protection pour un frein à disque et frein à disque comprenant ledit revêtement de protection.

(30) Priorität: 17.03.2004 DE 102004013310
(43) Veröffentlichungstag der Anmeldung: 21.09.2005
(73) Patentinhaber: MAN Nutzfahrzeuge Aktiengesellschaft, 80995 München (DE)
(72) Erfinder: Mühlbacher, Walter Dipl.-Ing., 4431 Heidershofen (AT); Simon, Bernhard, 85435 Erding (DE); Landsherr, Thomas Dipl.-Ing., 80995 München (DE)

(56) Entgegenhaltungen:
- DE-A1- 10 102 761
- US-A- 3 310 135
- US-A- 4 620 616

## Beschreibung

Die Erfindung betrifft eine Scheibenbremse für ein Nutzfahrzeug, insbesondere für einen baustellen- und/oder geländetauglichen LKW, mit mindestens einem eine Bremsscheibe mindestens teilweise abdeckenden Abdeckelementdas oberhalb eines oberen Scheitelpunktes der Bremsscheibe angeordnet ist.

In Scheibenbremsen von Baustellenfahrzeugen gelangen regelmäßig größere und kleinere Steine und Grobe Verschmutzung, die zu einem vorzeitigen Verschleiß der Bremsscheiben und Bremsbeläge führen können. Durch die Drehbewegungen eines Fahrzeugrades werden die Steine und Grobe Verschmutzung ähnlich wie bei einem Schaufelrad an der Felgeninnenseite und durch die Lauffläche des Fahrzeugrades zum obersten Punkt des Fahrzeugrades transportiert. Dort fallen sie dann von oben in die Scheibenbremse und können an den Scheibenbremsen einen vorzeitigen Verschleiß verursachen.

In der DE 43 44 051 C2 wird eine Scheibenbremse beschrieben, die eine Schutzabdeckung aufweist. Die Schutzabdeckung ist seitlich zur Bremsscheibe angeordnet. Deshalb kann die Schutzabdeckung ein Eintreten von Steinen und Grober Verschmutzung von oben in die Scheibenbremse nicht vermeiden.

Aus der US-A-3 310 135 ist eine Scheibenbremse bekannt, bei der die Bremsbeläge derart ausgelegt sind, dass sie hydraulisch oder über ein anderes Mittel mit den gegenüberliegenden Seiten einer drehbaren Scheibe oder drehbaren Scheiben in Anlage gebracht werden können. Die Bremsbeläge sind dabei entfernbar in einer ortsfesten Einrichtung zur Aufnahme eines Drehmoments angeordnet. Die Scheibenbremse umfasst dabei eine drehbare Scheibe, ein ortsfestes drehmomentaufnehmendes Mittel, das zur Scheibe benachbart ist und Bremsbacken zur beiderseitigen Anlage an der Bremsscheibe.

Die Erfindung hat die Aufgabe, das Eintreten von Steinen und Grober Verschmutzung von oben in die Scheibenbremse zu vermeiden und die Bremsscheiben ausreichend zu belüften.

Die Erfindung löst die gestellte Aufgabe mit einer Scheibenbremse der eingangs genannten Art, bei der erfindungsgemäß das mindestens eine Abdeckelement oberhalb eines oberen Scheitelpunktes der Bremsscheibe angeordnet ist. Ein Teilbereich des mindestens einen Abdeckelements deckt die gesamte Breite einer Umfangsfläche der Bremsscheibe ab. Ein weiterer Teilbereich des mindestens einen Abdeckelements deckt die Breite der Umfangsfläche der Bremsscheibe nur teilweise ab. Folglich deckt das Abdeckelement mindestens einen Bereich oberhalb des oberen Scheitelpunktes der Bremsscheibe ab und verhindert dadurch, dass Steine und Grobe Verschmutzung in die Scheibenbremse gelangen können. Somit wird ein vorzeitiger Verschleiß der Bremsscheibe und des Bremsbelages verhindert, so dass die Lebensdauer der Scheibenbremse verlängert wird. Die Anordnung des Abdeckelements oberhalb des oberen Scheitelpunktes der Bremsscheibe ist auch dann vorteilhaft, wenn in diesem Bereich ein Bremsträger und ein daran angrenzender Bremssattel vorgesehen sind. Zwischen dem Bremsträger und dem Bremssattel befindet sich ein mehr oder weniger breiter Schlitz durch den ebenfalls Schmutz in die Scheibenbremse gelangen kann, wenn er nicht durch das erfindungsgemäße Abdeckelement abgedeckt ist.

Um die Schutzwirkung des mindestens einen Abdeckelements zu verbessern, kann sich das mindestens eine Abdeckelement über den oberhalb des oberen Scheitelpunktes der Bremsscheibe befindlichen Bereich in Umfangsrichtung der Bremsscheibe hinaus erstrecken.

Ein Teilbereich des mindestens einen Abdeckelements kann die gesamte Breite einer Umfangsfläche der Bremsscheibe abdecken und ein weiterer Teilbereich des mindestens einen Abdeckelements kann die Breite der Umfangsfläche der Bremsscheibe nur teilweise abdecken. Somit wird die Bremsscheibe über einen möglichst großen Bereich von herabfallendem Schmutz geschützt, wobei gleichzeitig durch den die Bremsscheibe nur teilweise abdeckenden Teilbereich die Belüftung der Bremsscheibe weiterhin gewährleistet bleibt.

In einer alternativen Ausführungsform kann das mindestens eine Abdeckelement die gesamte Breite der Umfangsfläche der Bremsscheibe abdecken. Das mindestens eine Abdeckelement kann mit Belüftungsöffnungen versehen sein. Bei dieser Ausführungsvariante wird die Bremsscheibe ebenfalls über einen möglichst großen Bereich vor herabfallendem Schmutz geschützt, wobei gleichzeitig eine ausreichende Luftzufuhr gewährleistet wird.

Zur weiteren Optimierung der Schutzwirkung der mindestens einen Abdeckelements kann dieses die Bremsscheibe auch mit einer einer Radfelge zugewandten Innenseite mindestens teilweise abdecken.

In einer weiteren Ausführungsvariante kann das mindestens eine Abdeckelement die Bremsscheibe soweit abdecken, dass es an seinem einer Fahrbahn zugewandten Ende die Bremsscheibe mindestens mit der der Radfelge zugewandten Innenseite abdeckt und an dem der Fahrbahn zugewandten Ende über der Umfangsfläche eine Öffnung aufweist. Die Öffnung über der Umfangsfläche ermöglicht einen Lufteintritt und -austritt, welcher eine Kühlung der die Bremsscheibe gewährleistet. Da die Öffnung an dem der Fahrbahn zugewandten Ende, also möglichst weit unten vorgesehen ist, ist ein Eintreten von Schmutz in die Scheibenbremse ausgeschlossen.

In einer Weiterbildung der Erfindung kann die Scheibenbremse außerdem über einer Öffnung eines Bremsbelagschachtes ein weiteres Abdeckelement aufweisen. Da sich diese Öffnung in der Regel oberhalb einer Fahrzeugachse befindet, kann durch diese leicht Schmutz in die Scheibenbremse gelangen. Durch das Vorsehen des weiteren Abdeckelementes wird auf diese Weise ein möglicher Eintrag von Schmutz in die Scheibenbremse wirksam vermieden.

Zwischen dem weiteren Abdeckelement und einem Bremsbelag kann ein Federelement angeordnet sein. Das zusätzliche Abdeckelement kann in zusätzlicher Funktion zum Niderhalten der Bremsbeläge vorgesehen sein. Dabei kann das Abdeckelement die Bremsbeläge mittels des Federelementes niederhalten. Somit drückt das weitere Abdeckelement gegen das Federelement, und das Federelement drückt gegen den Bremsbelag. Folglich erfüllt das weitere Abdeckelement zwei Funktionen. Es verschließt den Bremsbelagschacht, wodurch es eine Verschmutzung und einen vorzeitigen Verschleiß der Scheibenbremse verhindert, und es hält den Bremsbelag in einer vorgesehenen Position.

Die Abdeckelemente können mit Öffnungen aufweisenden Ausbuchtungen versehen sein, wobei die Öffnungen der Fahrbahn zugewandt sein können. Somit kann auch durch die Öffnungen Luft zur Kühlung der Scheibenbremse eintreten, ohne dass Schmutz in die Scheibenbremse geraten kann.

Vorteilhafterweise sind die Abdeckelemente nachrüstbar, so dass insbesondere baustellen- und/oder geländetaugliche LKWs mit den Vorteilen der erfindungsgemäßen Scheibenbremse ausgestattet werden können. Die Nachrüstbarkeit der Abdeckelemente ist dadurch gewährleistet, dass diese ohne Demontage irgendwelcher Bauteile an der Scheibenbremse auf dieser mittels geeigneter Befestigungsmittel wie beispielsweise Verschraubungen, Hinterschneidungen, Bolzen, Splinte usw. befestigbar sind.

Das mindestens eine Abdeckelement kann an einem Achsschenkel oder an einem Radträger festgeschraubt sein. Erforderliche Gewindebohrungen zum Festschrauben des Abdeckelements können auch nachträglich bei schon bestehenden Scheibenbremsen mit relativ wenig Aufwand im Achsschenkel oder im Radträger vorgesehen werden.

Das weitere Abdeckelement kann mittels eines an diesem gegebenen Bügel am Bremssattel befestigt oder vom Bremssattel gelöst werden. Der Bügel kann entweder ein zusammen mit dem Abdeckelement gebildetes, einteiliges Bauteil sein und einen Bügelabschnitt des Abdeckelementes darstellen oder er kann ein separates Bauteil sein, welches mittels geeigneter Befestigungsmittel mit dem Abdeckelement verbindbar ist. Im Falle der Ausgestaltung des Bügels als separates Bauteil kann der Bügel beispielsweise ein ohnehin schon an der Scheibenbremse angeordneter Niederhalter sein, dessen Aufgabe es ist, den Bremsbelag im Bremsbelagschacht in der vorgesehenen Position zu halten. Da durch den Riegel das weitere Abdeckelement am Bremssattel befestigt oder vom Bremssattel gelöst werden kann, ermöglicht er es, das weitere Abdeckelement mit geringstem Aufwand nachzurüsten. Die Befestigung des als separates Bauteil ausgestatteten Bügels am Abdeckelement kann durch geeignete Befestigungsmittel, wie beispielsweise Clips-, Rast- oder Schraubverbindungen oder durch Schweiß-, Niet- oder Klebverbindungen erfolgen.

Unabhängig davon, ob der Bügel als einteilig mit dem Abdeckelement gebildeter Bügelabschnitt oder als separater Bügel ausgestaltet ist, kann dieser einenendes einen Vorsprung aufweisen, der in eine am Bremssattel vorhandene Öffnung eingreift. Durch den Eingriff des Vorsprunges in die Öffnung des Bremssattels wird der Bügel am Bremssattel formschlüssig fixiert.

Außerdem kann der Bügel anderen Endes mit einem Splint und einem Bolzen am Bremssattel befestigt und vom Bremssattel gelöst werden. Der Bolzen wird durch den Bügel und durch eine Bohrung am Bremssattel gesteckt. Der Splint verhindert, dass sich der Bolzen unbeabsichtigt löst. Die Befestigung des Bolzens und des Splintes kann mit wenigen Handgriffen geöffnet und geschlossen werden.

Nachfolgend werden Ausführungsbeispiele einer erfindungsgemäßen Scheibenbremse anhand der beiliegenden Zeichnungen näher erläutert.

Im Einzelnen zeigen:
- Fig. 1: eine Schnittansicht durch eine Scheibenbremse;
- Fig. 2: eine Vorderansicht auf die Scheibenbremse aus Fig. 1;
- Fig. 3: eine perspektivische Draufsicht auf die Scheibenbremse aus Fig. 1;
- Fig. 4: eine perspektivische Draufsicht auf die Scheibenbremse aus Fig. 1 aus einer zu Fig. 3 entgegen gesetzten Perspektive;
- Fig. 5: eine Ansicht in X-Richtung auf die Scheibenbremse aus Fig. 1;
- Fig. 6: eine Schnittansicht auf die Scheibenbremse entlang der Schnittlinie A-A aus Fig. 1;
- Fig. 7: schematisch und auszugsweise eine perspektivische Draufsicht auf die Scheibenbremse gemäß Fig. 4;
- Fig. 8: in Draufsicht ein zusätzliches Abdeckelement mit angeschweißtem Bügel;
- Fig. 9: in Seitenansicht das Abdeckelement gemäß Fig. 8.

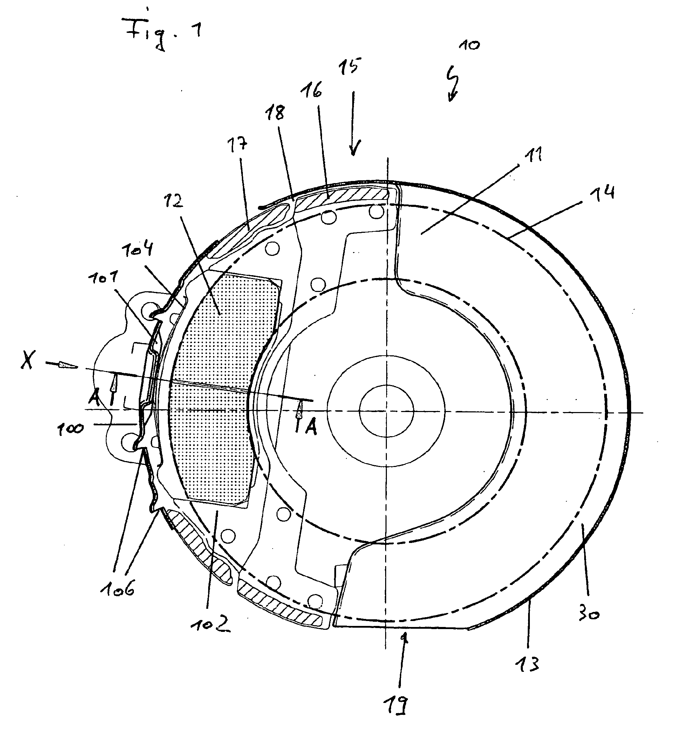

Fig. 1 zeigt eine Scheibenbremse 10 mit einer Bremsscheibe 11 und einem Bremsbelage 12. Ein Abdeckelement 13 deckt die Bremsscheibe 11 oberhalb einer Umfangsfläche 14 der Bremsscheibe 11 teilweise ab. Dadurch verhindert das Abdeckelement 13, dass Steine und Grobe Verschmutzung, die durch Drehbewegungen eines hier nicht näher dargestellten Fahrzeugrades zum höchsten Punkt des Fahrzeugrades transportiert werden, von oben in die Scheibenbremse 10 gelangen können. Das Abdeckelement 13 verhindert somit einen vorzeitigen Verschleiß der Bremsscheibe 11 und des Bremsbelages 12, so dass die Lebensdauer der Scheibenbremse 10 verlängert wird. Das Abdeckelement 13 weist im oberen Scheitelpunkt der Bremsscheibe 11 einen Bereich 15 auf, der einen Bremsträger 16, einen Bremssattel 17 und einen dazwischen befindlichen Spalt 18 überlappt. Folglich verhindert der Bereich 15 des Abdeckelements 13, dass Steine und Grobe Verschmutzung durch den Spalt 18 in die Scheibenbremse 10 eindringen können.

Das Abdeckelement 13 erstreckt sich nach rechts über den Bereich 15, der sich über dem oberen Scheitelpunkt der Bremsscheibe 11 befindet, hinaus bis hinunter zu einer einer hier nicht näher dargestellten Fahrbahn zugewandten Öffnung 19. Dadurch wird die Schutzwirkung des Abdeckelements 13 erheblich verbessert.

Das Abdeckelement 13 weist an seinem unteren, der hier nicht gezeigten Fahrbahn zugewandten Ende die Öffnung 19 auf, durch die zur Kühlung der Scheibenbremse 10 Luft eintreten und austreten kann. Da die vom Abdeckelement 13 freigelassene Öffnung 19 unten angeordnet ist, ist ein unerwünschtes Eintreten von Schmutz in die Scheibenbremse 10 von deren Oberseite her ausgeschlossen.

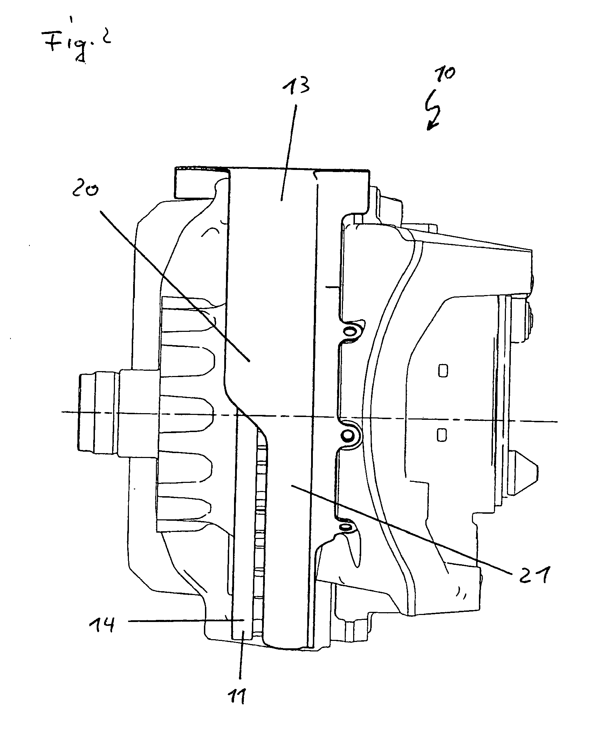

Das Abdeckelement 13 weist einen oberen Teilbereich 20 und einen unteren Teilbereich 21 auf (sieh Fig. 2). Da der Schmutz eher von oben als von unten in die Scheibenbremse 10 gelangen kann, deckt der obere Teilbereich 20 die Bremsscheibe 11 über die gesamte Breite der Umfangsfläche 14 ab. Der breitere obere Teilbereich 20 ermöglicht somit einen optimalen Schutz gegen ein unerwünschtes Eintreten von Steinen und Grober Verschmutzung. Der untere Teilbereich 21 hingegen deckt die Bremsscheibe 14 nur teilweise ab. Hier ist das Eintreten von Schmutz in die Scheibenbremse 10 sehr unwahrscheinlich. Die nur teilweise Abdeckung der Bremsscheibe 11 durch den schmaleren unteren Teilbereich 21 ermöglicht eine ausreichende Belüftung zur Kühlung der Scheibenbremse 10.

In einer alternativen hier nicht näher gezeigten Ausführungsform kann das Abdeckelement vom oberen Scheitelpunkt bis hinunter zu dem der Fahrbahn zugewandten Ende die Bremsscheibe über die gesamte Breite der Umfangsfläche abdecken. Dann kann das Abdeckelement mit Belüftungsöffnungen versehen sein, die eine ausreichende Luftzufuhr sicherstellen.

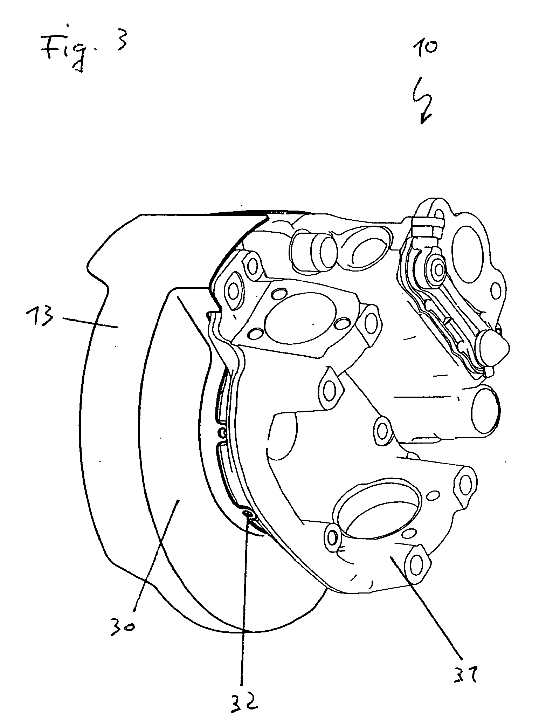

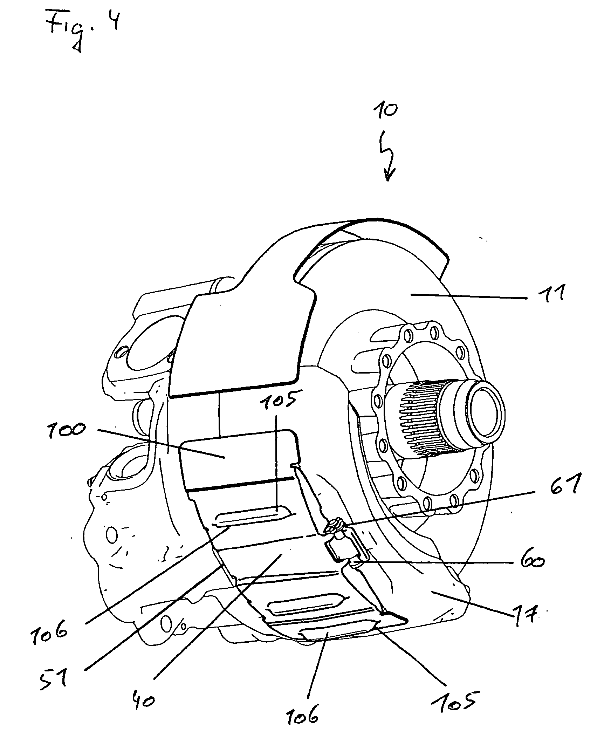

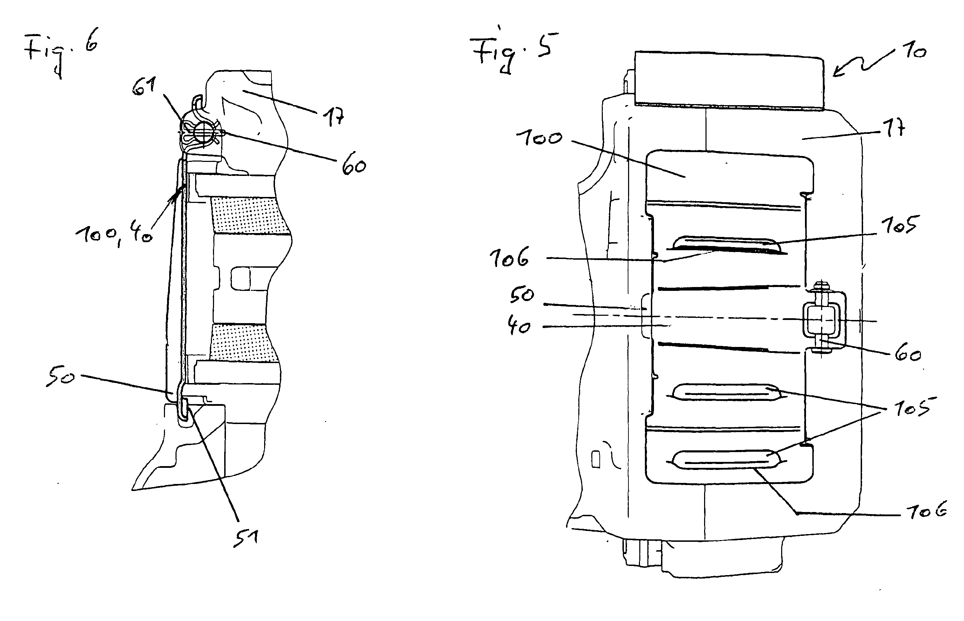

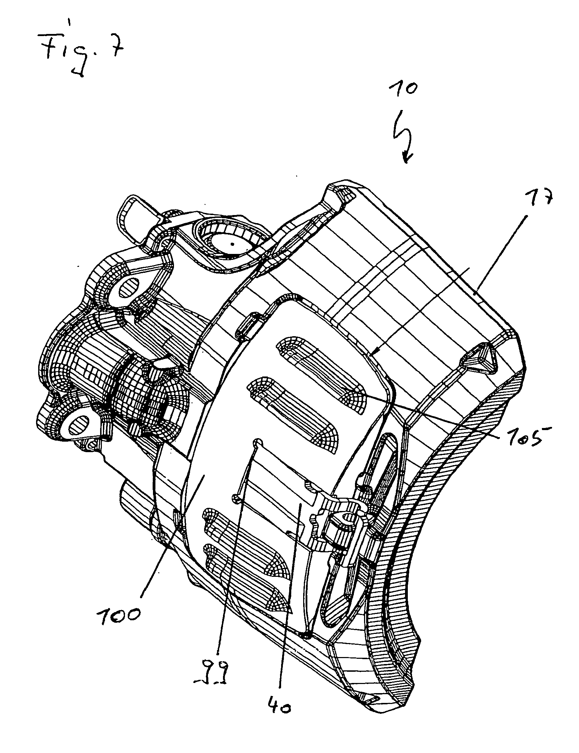

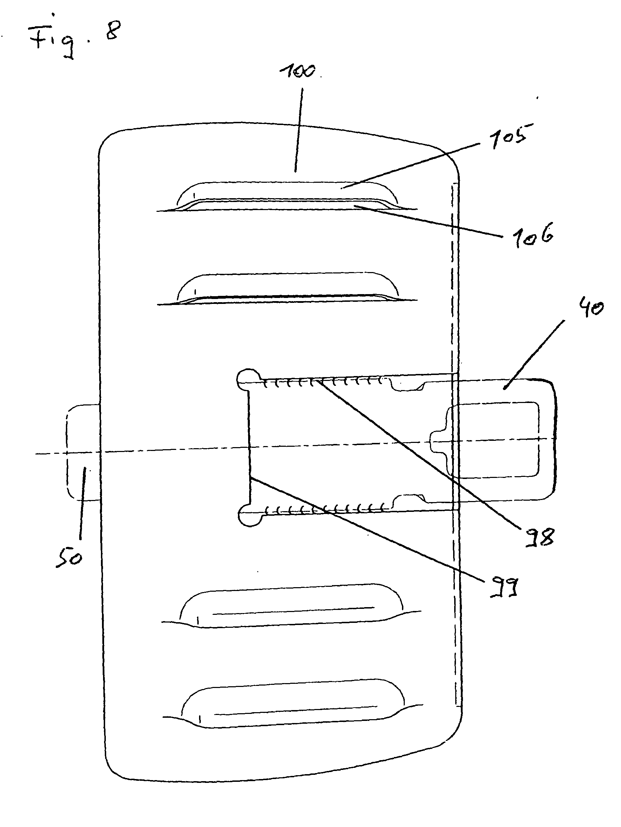

Außerdem deckt das Abdeckelement 13 die Bremsscheibe 11 auch mit einer hier nicht gezeigten Radfelge zugewandten Innenseite 30 ab, und zwar auch an dem der Fahrbahn zugewandten unteren Ende im Bereich der Öffnung 19 (siehe Fign. 1 und 3).

Ferner ist die Scheibenbremse 10 mit einem weiteren Abdeckelement 100 ausgerüstet (siehe Fign. 1, 4 und 5). Das weitere Abdeckelement 100 deckt eine Öffnung 101 eines Bremsbelagschachtes 102 ab (siehe Fig. 1). Da sich die Öffnung 101 oberhalb einer Radachse 103 befindet, kann durch sie leicht Schmutz in die Scheibenbremse 10 eintreten. In der in Fig. 1 gezeigten Ausführungsversion decken das Abdeckelement 13 und das weitere Abdeckelement 100 mit ihren jeweiligen Enden den Bremssattel 17 überlappend ab. Nach einer anderen, hier nicht gezeigten Version kann wenigstens eines der beiden Abdeckelemente 13, 100 zumindest teilweise bis auf einen tolerierbaren für Schmutz unpassierbaren Spalt an dem Bremssattel 17 herangeführt sein. Zwischen dem weiteren Abdeckelement 100 und dem Bremsbelag 12 ist ein Federelement 104 angeordnet. Das Abdeckelement 100 drückt gegen das Federelement 104, und das Federelement 104 drückt gegen Bremsbelag 12. Somit hält das Abdeckelement 100 zusammen mit dem Federelement 104 den Bremsbelag 12 in seiner bestimmten Position.

Das Abdeckelement 100 ist mit Ausbuchtungen 105 versehen, in denen sich Öffnungen 106 befinden. Die Öffnungen 106 weisen nach unten, so dass durch sie nur Luft zur Kühlung der Scheibenbremse 10 eintreten kann, ohne dass Schmutz in die Scheibenbremse 10 gelangt (siehe Fign. 1, 4 und 5).

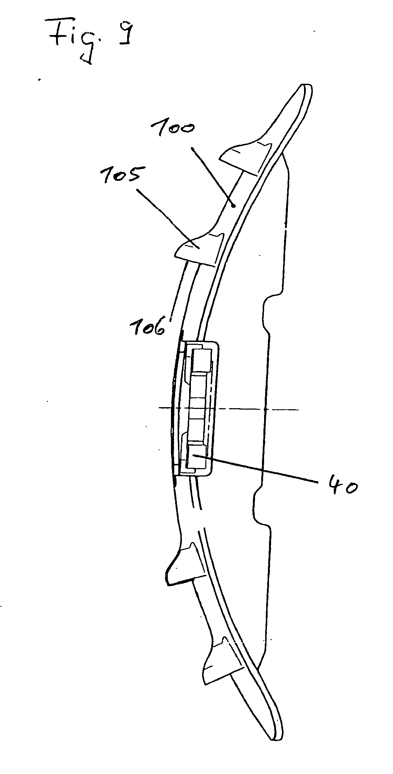

Das weitere Abdeckelement 100 ist in dieser Ausführungsvariante abschnittsweise zu einem Bügel 40 (siehe Fign. 4, 5 und 6) ausgebildet, welcher am Bremssattel 17 befestigbar ist. Bei den in Fig. 7 bis Fig. 9 gezeigten Ausführungsbeispielen ist der Bügel 40 ein separates Bauteil, welches das weitere Abdeckelement 100 in einer in letzterem gebildeten Durchdringung 99 fixierend aufnimmt. Wie in Fig. 8 gezeigt, kann das Abdeckelement 100 zusätzlich über Schweißungen 98 mit dem separaten Bügel 40 verbunden sein. Dabei kann der Bügel 40 ein ohnehin schon an der Scheibenbremse 10 vorhandenes Bauteil, beispielsweise ein Niederhalter für die Bremsbeläge sein. An diesem separaten Bügel 40 kann beispielsweise das Abdeckelement 100 an herkömmlichen Scheibenbremsen nachgerüstet werden.

Unabhängig davon, ob der Bügel 40 als Bügelabschnitt (Fig. 4 bis 6) entweder in das Abdeckelement 100 integriert oder als separates Bauteil (Fig. 7 bis 9) mit dem Abdeckelement 100 verbunden ist, weist dieser Bügel/Bügelabschnitt 40 einen Vorsprung 50 auf, der in eine im Bremssattel 17 vorhandene Öffnung 51 eingreift (siehe Fign. 4, 5, 6 und 8). Dabei wird der Bügel/Bügelabschnitt 40 einenendes formschlüssig am Bremssattel 17 befestigt. anderen Endes ist der Bügel/Bügelabschnitt 40 mit einem Bolzen 60 und einem Splint 61 am Bremssattel 17 befestigt. Durch den Bolzen 60 und den Splint 61 kann das weitere Abdeckelement 100 mit wenigen Handgriffen am Bremssattel 17 befestigt und von diesem entfernt werden.

Das Abdeckelement 13 ist an einem Radträger 31 angeschraubt. Zu diesem Zweck sind an dem Abdeckelement 13 Verschraubungsöffnungen 32 vorgesehen (siehe Fig. 3). In den Radträger 31 können nachträglich noch radial angeordnete Schraubengewinde eingearbeitet werden, so dass das Abdeckelement 13 ebenfalls auch an schon bestehenden Scheibenbremsen nachgerüstet werden kann.

In Fig. 7 ist schematisch und auszugsweise eine perspektivische Draufsicht auf die Scheibenbremse 10 gemäß Fig. 4 gezeigt. Das weitere Abdeckelement 100 weist hier eine Durchdringung 99 auf, in die der separate Bügel 40 hindurchgreift und das Abdeckelement 100 am Bremssattel 17 fixiert.

In Fig. 8 ist in Draufsicht das weitere Abdeckelement 100 mit einem separat ausgebildeten, an diesem mittels Schweißnaht 98 befestigten Bügel 40 gezeigt. Der Bügel 40 weist an seinem einen Ende den in die Öffnung 51 (Fig. 5 und Fig. 6) eingreifenden Vorsprung 50 auf.

In Fig. 9 ist in Seitenansicht das weitere Abdeckelement 100 mit separatem Bügel 40 gemäß Fig. 8 gezeigt.

### BEZUGSZEICHENLISTE

- 10: Scheibenbremse
- 11: Bremsscheibe
- 12: Bremsbelag
- 13: Abdeckelement
- 14: Umfangsfläche
- 15: Bereich
- 16: Bremsträger
- 17: Bremssattel
- 18: Spalt
- 19: Öffnung

- 20: oberer Teilbereich
- 21: unterer Teilbereich

- 30: Innenseite
- 31: Radträger
- 32: Verschraubungsöffnungen

- 40: Bügel, separat oder in Abdeckelement 100 integriert

- 50: Vorsprung
- 51: Öffnung

- 60: Bolzen
- 61: Splint

- 98: Verschweißung
- 99: Durchdringung
- 100: Abdeckelement, zusätzliches
- 101: Öffnung
- 102: Bremsbelagschacht
- 103: Radachse
- 104: Federelement
- 105: Ausbuchtung
- 106: Öffnung

## Patentansprüche

1. Scheibenbremse (10) für ein Nutzfahrzeug, insbesondere für einen baustellen- und/oder geländetauglichen LKW, mit mindestens einem eine Bremsscheibe (11) mindestens teilweise abdeckenden Abdeckelement (13), wobei das mindestens eine Abdeckelement (13) oberhalb eines oberen Scheitelpunktes der Bremsscheibe (11) angeordnet ist, **dadurch gekennzeichnet, dass** ein Teilbereich (20) des mindestens einen Abdeckelements (13) die gesamte Breite einer Umfangsfläche (14) der Bremsscheibe (11) abdeckt und ein weiterer Teilbereich (21) des mindestens einen Abdeckelements (13) die Breite der Umfangsfläche (14) der Bremsscheibe (11) nur teilweise abdeckt.

2. Scheibenbremse (10) nach Anspruch 1, **dadurch gekennzeichnet, dass** sich das mindestens eine Abdeckelement (13) über einen oberhalb des oberen Scheitelpunktes der Bremsscheibe (11) befindlichen Bereich (15) in Umfangsrichtung der Bremsscheibe (11) hinaus erstreckt.

3. Scheibenbremse (10) nach Anspruch 2, **dadurch gekennzeichnet, dass** das mindestens eine Abdeckelement (13) die gesamte Breite der Umfangsfläche (14) der Bremsscheibe (11) abdeckt und das mindestens eine Abdeckelement (13) mit Belüftungsöffnungen versehen ist.

4. Scheibenbremse (10) nach einem der Ansprüche 1 bis 3, **dadurch gekennzeichnet, dass** das mindestens eine Abdeckelement (13) die Bremsscheibe (11) zusätzlich mit einer einer Radfelge zugewandten Innenseite (30) mindestens teilweise abdeckt.

5. Scheibenbremse (10) nach einem der Ansprüche 1 bis 4, **dadurch gekennzeichnet, dass** das mindestens eine Abdeckelement (13) an seinem einer Fahrbahn zugewandten Ende die Bremsscheibe (11) mindestens mit der der Radfelge zugewandten Innenseite (30) abdeckt, und dass das mindestens eine Abdeckelement (13) an dem der Fahrbahn zugewandten Ende über der Umfangsfläche (14) eine Öffnung (19) aufweist.

6. Scheibenbremse (10) nach einem der Ansprüche 1 bis 5, **dadurch gekennzeichnet, dass** die Scheibenbremse (10) außerdem über einer Öffnung (101) eines Bremsbelagschachtes (102) ein weiteres Abdeckelement (100) aufweist.

7. Scheibenbremse (10) nach Anspruch 6, **dadurch gekennzeichnet, dass** zwischen dem weiteren Abdeckelement (100) und einem Bremsbelag (12) ein Federelement (104) angeordnet ist.

8. Scheibenbremse (10) nach Anspruch 7, **dadurch gekennzeichnet, dass** das weitere Abdeckelement (100) zusätzlich zum Niederhalten der Bremsbeläge (12) vorgesehen ist.

9. Scheibenbremse (10) nach Anspruch 8, **dadurch gekennzeichnet, dass** das Abdeckelement (100) die Bremsbeläge (12) mittels des Federelementes (104) niederhält.

10. Scheibenbremse (10) nach einem der Ansprüche 1 bis 9, **dadurch gekennzeichnet, dass** die Abdeckelemente (13,100) mit Öffnungen (106) aufweisenden Ausbuchtungen (105) versehen sind, und dass die Öffnungen (106) der Fahrbahn zugewandt sind.

11. Scheibenbremse (10) nach einem der Ansprüche 1 bis 10, **dadurch gekennzeichnet, dass** die Abdeckelemente (13,100) nachrüstbar sind.

12. Scheibenbremse (10) nach einem der Ansprüche 6 bis 11, **dadurch gekennzeichnet, dass** das weitere Abdeckelement (100) mittels eines an diesem gegebenen Bügels (40) am Bremssattel (17) befestigbar und vom Bremssattel (17) lösbar ist.

13. Scheibenbremse (10) nach Anspruch 12, **dadurch gekennzeichnet, dass** der Bügel (40) einenendes einen Vorsprung (50) aufweist, der in eine am Bremssattel (17) vorhandene Öffnung (51) eingreift.

14. Scheibenbremse (10) nach Anspruch 12 oder 13, **dadurch gekennzeichnet, dass** der Bügel (40) anderenendes mit einem Splint (61) und einem Bolzen (60) am Bremssattel (17) befestigbar und vom Bremssattel (17) lösbar ist.

15. Scheibenbremse (10) nach einem oder mehreren der vorangegangenen Ansprüche 12 bis 14, **dadurch gekennzeichnet, dass** der am weiteren Abdeckelement (100) gegebene Bügel (40) ein einteilig mit dem Abdeckelement (100) gebildetes Bauteil ist.

16. Scheibenbremse (10) nach einem oder mehreren der vorangegangenen Ansprüche 13 bis 15, **dadurch gekennzeichnet, dass** der am weiteren Abdeckelement (100) gegebene Bügel (40) ein separates Bauteil ist, welches mittels Befestigungsmittel wie beispielsweise Clips-, Rast-, Schweiß- oder Schraubverbindungen oder dergleichen mit dem Abdeckelement (100) verbunden ist.

17. Schreibenbremse (10) nach einem der Ansprüche 1 bis 16, **dadurch gekennzeichnet, dass** das mindestens eine Abdeckelement (13) an einem Achsschenkel oder an einem Radträger (31) festgeschraubt ist.

## Claims

1. Disc brake (10) for a commercial vehicle, in particular for a construction-site and/or off-road truck with at least one cover element (13) which covers a brake disc (11) at least partially, whereby the at least one cover element (13) is arranged above an upper vertex of the brake disc (11), **characterised in that** a part (20) of the at least one cover element (13) covers the entire width of a circumferential surface (14) of the brake disc (11) and another part (21) of the at least one cover element (13) covers the width of the circumferential surface (14) of the brake disc (11) only partially.

2. Disc brake (10) according to Claim 1, **characterised in that** the at least one cover element (13) extends beyond an area (15) above the upper vertex of the brake disc (11) in circumferential direction of the brake disc (11).

3. Disc brake (10) according to Claim 2, **characterised in that** the at least one cover element (13) covers the entire width of the circumferential surface (14) of the brake disc (11) and the at least one cover element (13) is provided with ventilation orifices.

4. Disc brake (10) according to one of the Claims 1 to 3, **characterised in that** the at least one cover element (13) at least partially covers the brake disc (11) also with an inner side (30) facing a wheel rim.

5. Disc brake (10) according to one of the Claims 1 to 4, **characterised in that that** end of the at least one cover element (13) which faces a road surface covers the brake disc (11) at least with the inner side (30) facing the wheel rim and that that end of the at least one cover element (13) which faces the road surface features an orifice (19) above the circumferential surface (14).

6. Disc brake (10) according to one of the Claims 1 to 5, **characterised in that** the brake disc (10) features yet another cover element (100) above an orifice (101) of a brake pad well (102).

7. Disc brake (10) according to Claim 6, **characterised in that** a spring element (104) is installed between the further cover element (100) and a brake pad (12).

8. Disc brake (10) according to Claim 7, **characterised in that** the further cover element (100) is also provided for keeping down the brake pads (12).

9. Disc brake (10) according to Claim 8, **characterised in that** the cover element (100) keeps down the brake pads (12) by means of the spring element (104).

10. Disc brake (10) according to one of the Claims 1 to 9, **characterised in that** the cover elements (13, 100) feature protrusions (105) provided with orifices (106) facing the road surface.

11. Disc brake (10) according to one of the Claims 1 to 10, **characterised in that** the cover elements (13, 100) can be retrofitted.

12. Disc brake (10) according to one of the Claims 6 to 11, **characterised in that** the further cover element (100) can be fastened to the brake caliper (17) by means of bow (40) provided on said cover element (100) and can be detached from the brake caliper (17).

13. Disc brake (10) according to Claim 12, **characterised in that** one end of the bow (40) features a projection (50) that meshes with an orifice (51) in the brake caliper (17).

14. Disc brake (10) according to Claim 12 or 13, **characterised in that** the other end of the bow (40) can be fastend to the brake caliper (17) with a cotter pin (61) and a pin (60) and can be detached from the brake caliper (17).

15. Disc brake (10) according to one or several of the foregoing Claims 12 to 14, **characterised in that** the bow (40) provided on the further cover element (100) forms a single-piece part with the cover element (100).

16. Disc brake (10) according to one or several of the foregoing Claims 13 to 15, **characterised in that** the bow (40) provided on the further cover element (100) is a separate part which connected with the cover element (100) by means of fasteners such as clip-type, detent-type, welded or bolted connections

17. Disc brake (10) according to one of the Claims 1 to 16, **characterised in that** the at least one cover element (13) is bolted to an axle stub or a wheel carrier (31).

## Revendications

1. Frein à disque (10) pour un véhicule industriel, en particulier pour un camion de chantier et/ou capable d'évoluer en tout-terrain, avec au moins un élément de recouvrement (13) recouvrant au moins partiellement un disque de frein (11), auquel cas au minimum l'élément de recouvrement (13) est disposé au-dessus d'un point culminant supérieur du disque de frein (11), **caractérisé en ce qu'**une zone partielle (20) d'au moins l'élément de recouvrement (13) recouvre la largeur totale d'une surface circonférentielle (14) du disque de frein et qu'une autre zone partielle (21) d'au moins l'élément de recouvrement (13) recouvre la largeur de la surface circonférentielle (14) du disque de frein.

2. Frein à disque (10) selon la revendication 1, **caractérisé en ce qu'**au moins l'élément de recouvrement (13) s'étend au-dessus d'une partie (15) au-delà du point culminant supérieur du disque de frein (11) dans le sens de la circonférence du disque de frein (11).

3. Frein à disque (10) selon la revendication 2, **caractérisé en ce qu'**au moins l'élément de recouvrement (13) recouvre la largeur totale de la surface circonférentielle (14) du disque de frein (11) et au moins l'élément de recouvrement est doté d'ouvertures d'aération.

4. Frein à disque (10) selon l'une des revendications 1 à 3, **caractérisé en ce qu'**au moins l'élément de recouvrement (13) recouvre au moins partiellement le disque de frein (11) en supplément avec une face intérieure (30) tournée vers une jante de roue.

5. Frein à disque (10) selon l'une des revendications 1 à 4, **caractérisé en ce qu'**au moins l'élément de recouvrement (13) recouvre, au niveau de son extrémité tournée vers une chaussée, le disque de frein (11) au moins au moyen de la face intérieure (30) tournée vers la jante de roue et **en ce qu'**au moins l'élément de recouvrement (13) présente une ouverture (19) au-dessus de la surface circonférentielle (14) au niveau de l'extrémité tournée vers la chaussée.

6. Frein à disque (10) selon l'une des revendications 1 à 5, **caractérisé en ce que** le frein à disque (10) présente également un autre élément de recouvrement (100) au-dessus d'une ouverture (101) d'un compartiment pour plaquettes de frein (102).

7. Frein à disque (10) selon la revendication 6, **caractérisé en ce qu'**un élément à ressort (104) est disposé entre l'autre élément de recouvrement (100) et une plaquette de frein (12).

8. Frein à disque (10) selon la revendication 7, **caractérisé en ce que** l'autre élément de recouvrement (100) est destiné en supplément à retenir les plaquettes de frein (12).

9. Frein à disque (10) selon la revendication 8, **caractérisé en ce que** l'élément de recouvrement (100) retient les plaquettes de frein (12) au moyen de l'élément à ressort (104).

10. Frein à disque (10) selon l'une des revendications 1 à 9, **caractérisé en ce que** les éléments de recouvrement (13, 100) sont dotés de courbures (105) présentant des ouvertures (106) et **en ce que** les ouvertures (106) sont tournées vers la chaussée.

11. Frein à disque (10) selon l'une des revendications 1 à 10, **caractérisé en ce que** les éléments de recouvrement (13, 100) peuvent être montés après coup.

12. Frein à disque (10) selon l'une des revendications 6 à 11, **caractérisé en ce que** l'autre élément de recouvrement (100) peut être fixé sur l'étrier de frein (17) au moyen d'une bride de fixation (40) fixée sur l'élément de recouvrement (100) et peut être retiré de l'étrier de frein (17).

13. Frein à disque (10) selon la revendication 12, **caractérisé en ce que** la bride de fixation (40) présente à une extrémité un élément en saillie (50) qui s'encrante dans une ouverture (51) réalisée sur l'étrier de frein (17).

14. Frein à disque (10) selon la revendication 12 ou 13, **caractérisé en ce que** la bride de fixation (40) peut être fixée à l'autre extrémité sur l'étrier de frein (17) à l'aide d'une goupille (61) et d'un axe (60), et peut être retiré de l'étrier de frein (17).

15. Frein à disque (10) selon une ou plusieurs revendications mentionnées précédemment de 12 à 14, **caractérisé en ce que** la bride de fixation (40) existante sur l'autre élément de recouvrement (100) est une pièce monobloc avec l'élément de recouvrement (100).

16. Frein à disque (10) selon une ou plusieurs revendications mentionnées précédemment de 13 à 15, **caractérisé en ce que** la bride de fixation (40) existante sur l'autre élément de recouvrement (100) est une pièce séparée, qui est reliée à l'élément de recouvrement (100) à l'aide d'un moyen de fixation tel que, par exemple, des liaisons par clips, encrantées, soudées, vissées ou des liaisons similaires.

17. Frein à disque (10) selon l'une des revendications 1 à 16, **caractérisé en ce qu'**au moins l'élément de recouvrement (13) est vissé de manière fixe sur une fusée d'essieu ou sur un support de roue (31).
